# EUROPEAN PATENT APPLICATION

(11) **EP 2 736 216 A2**
(43) Date of publication of application: **28.05.2014**
(21) Application number: 12814333.6
(22) Date of filing: 23.07.2012
(51) Int. Cl.: H04L 29/06, H04W 68/02, H04W 4/12

(54) **METHOD FOR PROVIDING AN IN-VEHICLE NOTIFICATION SERVICE, MACHINE-READABLE STORAGE MEDIUM, HEAD UNIT DEVICE, AND MOBILE DEVICE**

(30) Priority: 21.07.2011 KR 20110072694; 19.09.2011 KR 20110094326
(71) Applicant: Samsung Electronics Co., Ltd., Suwon-si, Gyeonggi-do, 443-742 (KR)
(72) Inventor: PARK, Ho-Yeon, Gyeonggi-do 443-742 (KR); MAENG, Je Young, Gyeonggi-do 443-742 (KR)
(74) Representative: Nederlandsch Octrooibureau
(86) International application number: PCT/KR2012/005866
(87) International publication number: WO 2013/012300

(57) **Abstract**

According to one aspect of the present invention, a method for providing an in-vehicle notification service by means of a head unit device comprises the steps of: requesting a mobile device to start a notification service; receiving, upon the occurrence of an event which a user is to be notified of, information on the event from the mobile device; and displaying the information on the event to the user.

## Description

### Technical Field

The present invention relates generally to a method for using an in-vehicle notification service, and more particularly to a method for performing unidirectional or bidirectional notification in a particular situation such as call reception, message reception or a device status alarm between an in-vehicle head unit device and a mobile device.

### Background Art

A car is not only used for the purpose of driving, but also is recognized as a place in which a user can enjoy various types of entertainment. According to this trend, infotainment has been developed to enable a user to receive various pieces of information or enjoy media, such as music or a video, through a mobile device in a vehicle.

A system which provides the infotainment is used to provide information to users. The information is typically provided to the users in the form of an audio, a video, or a combination thereof. Interaction between a mobile device and an in-vehicle head unit device within a vehicle increases user convenience.

### Detailed Description of the Invention

### Technical Problem

As described above, the interaction between the mobile device and the in-vehicle head unit device increases the user convenience by providing various pieces of information in response to specific demands of the users.

However, currently, no notification mechanism has been disclosed for services requiring a notification, such as the transmission of call information, that of message information, or that of device status information.

### Technical Solution

Therefore, an aspect of the present invention is to define a new notification mechanism in which unidirectional or bidirectional notification in a particular situation, such as the transmission of call information, that of message information or that of device status information, is performed between a head unit device and a mobile device according to in-vehicle characteristics.

In accordance with an aspect of the present invention, there is provided a method for providing an in-vehicle notification service by a head unit device, which includes: sending a request for start of a notification service to a mobile device; receiving information on an event from the mobile device, according to occurrence of the event which becomes a target of notification; and displaying the information on the event to a user.

In accordance with another aspect of the present invention, there is provided a method for providing an in-vehicle notification service by a mobile device, which includes: receiving a request for start of a notification service from a head unit device; and transmitting information on the event to the head unit device, according to occurrence of the event which becomes a target of notification, wherein the event corresponds to one of call reception, call origination, a change in a call status, message reception, a change in a message status and a device status alarm.

In accordance with still another aspect of the present invention, there is provided a machine-readable storage medium storing a program for executing the method for providing the in-vehicle notification service.

In accordance with yet another aspect of the present invention, there is provided a mobile terminal including the machine-readable storage medium.

### Advantageous Effects

According to the present invention, notification, such as an incoming/outgoing call, a new message or a device status alarm at a particular danger level, can be transmitted unidirectionally or bidirectionally between a head unit device and a mobile device in an in-vehicle environment.

### Brief Description of the Drawings

FIG. 1 is a block diagram illustrating a configuration of a system for providing an in-vehicle notification service according to a first exemplary embodiment of the present invention;
FIG. 2 is a signal flow diagram illustrating a method for providing an in-vehicle notification service according to a first exemplary embodiment of the present invention;
FIG. 3 is a view illustrating a state diagram describing a change in a call status related to an incoming call information notification;
FIG. 4 is a signal flow diagram illustrating an action request and a response to the action request;
FIG. 5 is a view illustrating a state diagram describing a change in a call status related to an outgoing call notification;
FIG. 6 is a view illustrating a state diagram describing a change in a message status related to an incoming message notification;
FIG. 7 is a signal flow diagram illustrating a signal flow which is based on a CDB architecture illustrated in FIG. 1, according to a first embodiment of the present invention;
FIG. 8 is a state diagram illustrating an example of a change in a call status in a case where a media session is unexpectedly disconnected, according to a first embodiment of the present invention;
FIG. 9 is a block diagram illustrating a configuration of a system for providing an in-vehicle notification service according to a second exemplary embodiment of the present invention;
FIG. 10 is a view illustrating a state diagram describing a change in a call status related to an outgoing call notification using a Universal Plug and Play (UPnP) telephony; and
FIG. 11 is a signal flow diagram illustrating a method for performing media streaming between an in-vehicle head unit device and a mobile device, according to a second embodiment of the present invention.

### Mode for Carrying Out the Invention

Hereinafter, exemplary embodiments of the present invention will be described in detail with reference to the accompanying drawings. The following description includes specific details such as elements, etc., and the specific details are only provided in order to help a more comprehensive understanding of the present invention. Therefore, it will be apparent to those having ordinary knowledge in the technical field of the present invention that predetermined changes in form and details can be made in the specific details without departing from the scope of the present invention. Further, when it is determined that a detailed description of the known art related to the present invention may obscure the subject matter of the present invention, the detailed description thereof will be omitted.

Although terms including ordinal numbers, such as first and second, may be used herein to describe various elements, these elements should not be limited by these terms. These terms are only used to distinguish one element from another. For example, a first element could be termed a second element, and similarly, a second element could be termed a first element, without departing from the scope of the present invention. As used herein, the term "and/or" includes any and all combinations of one or more of the associated listed items.

The terminology used herein is merely used to describe particular embodiments of the present invention, and is not intended to limit the present invention. As used herein, the singular forms "a," "an" and "the" are intended to include the plural forms as well, unless the context clearly indicates otherwise. In the present specification, it is to be understood that the terms "comprising," "including" or "having" are intended to indicate the existence of the features, numbers, steps, operations, elements, parts, or combinations thereof disclosed in the specification, and are not intended to preclude the possibility that one or more other features, numbers, steps, operations, elements, parts, or combinations thereof may exist or may be added.

Unless otherwise defined, all terms (including technical and scientific terms) used herein have the same meaning as commonly understood by those having ordinary knowledge in the technical field, to which the present invention pertains. Terms, such as those defined in commonly used dictionaries, should be interpreted as having a meaning that is consistent with their meaning in the context of the relevant art, and will not be interpreted in an idealized or overly formal sense unless expressly so defined herein.

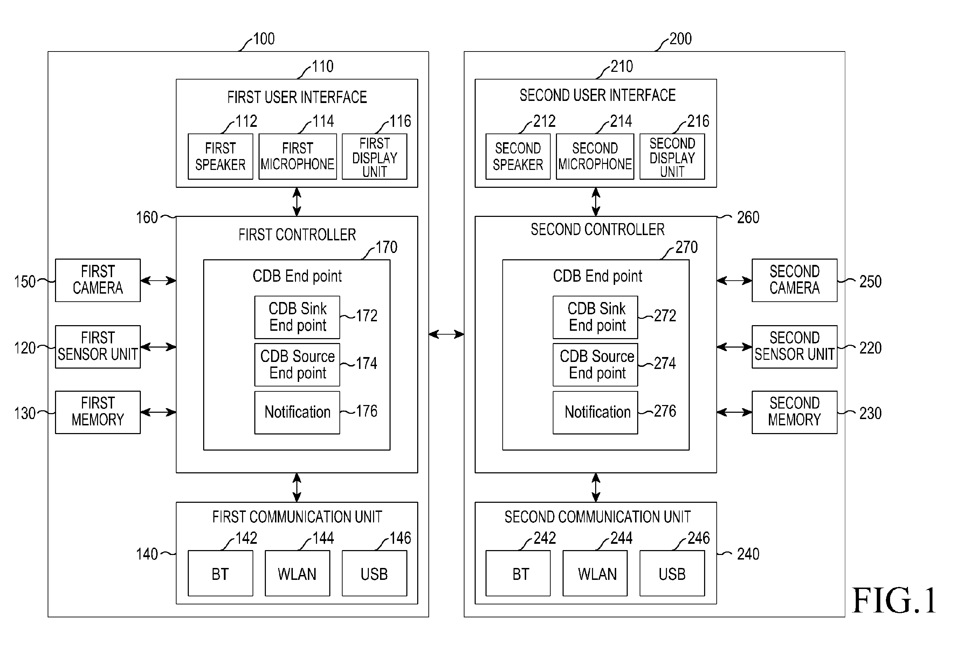

FIG. 1 is a block diagram illustrating a configuration of a system for providing an in-vehicle notification service according to a first exemplary embodiment of the present invention. The system includes a head unit device 100 and a mobile device 200 which are installed in a vehicle.

The head unit device 100 includes a first user interface 110, which includes a first speaker 112, a first microphone 114 and a first display unit 116, a first sensor unit 120, a first memory 130, a first communication unit 140, a first camera 150, and a first controller 160.

Examples of the mobile device 200 may include a smart phone, a mobile phone, a video game console, a laptop computer, a tablet Personal Computer (PC), a Personal Media Player (PMP), a Personal Digital Assistant (PDA), or the like. The mobile device 200 may be implemented as a portable mobile device having a wireless communication function.

The mobile device 200 includes a second user interface 210, which includes a second speaker 212, a second microphone 214 and a second display unit 216, a second sensor unit 220, a second memory 230, a second communication unit 240, a second camera 250, and a second controller 260. Hereinafter, basic functions that the mobile device 200 and the head unit device 100 have in common, will be first described as follows. In the following description, for example, in the case of the user interfaces 110 and 210, the user interface is termed the first user interface 110 in the head unit device 100, and the user interface is termed the second user interface 210 in the mobile device 200. In other words, the following description may be regarded as a description of functions that elements of the mobile device 200 perform or that of mutual relations between the elements of the mobile device 200. Otherwise, the following description may be regarded as a description of functions that elements of the head unit device 100 perform or that of mutual relations between the elements of the head unit device 100.

The user interface 110 or 210, which is a means for receiving user input or notifying a user of information, may further include multiple buttons, a vibration motor, a connector, a keypad, or the like. For example, cursor control such as a mouse, a trackball, a joystick or cursor direction keys, although not limited thereto, may be provided to the user interface 110 or 210 in order to transmit and receive information to/from the controller 160 or 260 and in order to control the movement of a cursor on a screen of the display unit 116 or 216.

According to the control of the controller 160 or 260, the speaker 112 or 212 may output sounds matched to various signals (e.g., a wireless signal, a broadcast signal, a digital audio file, a digital moving image file, and photography) to the outside of the device 100 or 200. The speaker 112 or 212 may output a sound matched to a function that the device 100 or 200 performs. The one speaker 112 or 212 or multiple speakers 112 or 212 may be disposed at an appropriate position or appropriate positions of the device 100 or 200.

According to the control of the controller 160 or 260, the microphone 114 or 214 receives a voice or sound as input, and generates an electrical signal.

The buttons may be disposed on a front surface, a lateral surface or a rear surface of the device 100 or 200, and may include a power/lock button (not illustrated), a volume button (not illustrated), a menu button, a home button, a back button, a search button, or the like.

According to the control of the controller 160 or 260, the vibration motor may convert an electrical signal into a mechanical vibration. For example, when the device 100 or 200 in a vibration mode receives a voice call or a video call through the communication unit 140 or 240, the device 100 or 200 may operate the vibration motor thereof. The one vibration motor or multiple vibration motors may be mounted within the device 100 or 200. The vibration motor may operate in response to a touch gesture of the user who touches the screen of the display unit 116 or 216 and a touch drag gesture of the user on the screen of the display unit 116 or 216.

A connector may be used as an interface for connecting the device 100 or 200 to an external device or a power source (not illustrated). According to the control of the controller 160 or 260, through a wired cable connected to the connector, data stored in the memory 130 or 230 of the device 100 or 200 may be transmitted to the external device or data may be received from the external device. Through the wired cable connected to the connector, power may be supplied by the power source or a battery may be charged.

The keypad may receive key input from the user in order to control the device 100 or 200. The keypad includes a physical keypad mounted on the device 100 or 200 or a virtual keypad displayed by the display unit 116 or 216.

The display unit 116 or 216 displays an image on the screen according to an image signal which is input from the controller 160 or 260. The display unit 116 or 216 may be implemented by a Liquid Crystal Display (LCD), a touch screen, and/or the like. The display unit 116 or 216 displays an image according to the control of the controller 160 or 260. When a user input means (e.g., a finger or a stylus) touches the screen of the display unit 116 or 216, the display unit 116 or 216 generates a key touch interrupt, and outputs user input information including input coordinates and an input state to the controller 160 or 260, according to the control of the controller 160 or 260.

The display unit 116 or 216 may provide the user with a graphical user interface matched to various services or functions (e.g., an in-vehicle notification service, a telephone call, data transmission, broadcasting, capturing of photographs and/or moving images). The display unit 116 or 216 may provide touch information (i.e., user input information) which is input to the graphical user interface, to the controller 160 or 260. The display unit 116 or 216 may receive, as input, at least one touch information through the user's body part (e.g., fingers including a thumb) or an input means (e.g., a stylus pen) enabling a touch.

According to embodiments of the present invention, a touch is not limited to a contact between the display unit 116 or 216 and the user's body part or the input means enabling a touch, but includes a non-contact (e.g., a case in which a detectable distance between the display unit 116 or 216 and the user's body part or the input means enabling a touch is less than or equal to 1 mm). The display unit 116 or 216, for example, may be implemented by a resistive touch screen, a capacitive touch screen, an infrared touch screen, an acoustic wave touch screen, and/or the like.

The sensor unit 120 or 220 includes at least one sensor for detecting the state (e.g., location, bearing, movement, etc.) of the device 100 or 200. For example, the sensor unit 120 or 220 may include a proximity sensor for detecting whether the user is close to the device 100 or 200 and how close the user is to the device 100 or 200, and a motion/bearing sensor for detecting the movement (e.g., rotation, acceleration, deceleration, vibration, etc.) of the device 100 or 200. Also, the motion/bearing sensor may include an acceleration sensor, a gravity sensor, a geomagnetic sensor, a gyro sensor, a shock sensor, a Global Positioning System (GPS) sensor, and a compass sensor. The sensor unit 120 or 220 detects the state of the device 100 or 200, generates a signal corresponding to the detection, and transmits the generated signal to the controller 160 or 260. For example, the GPS sensor receives a radio signal from each of multiple GPS satellites (not illustrated) in the Earth's orbit, and calculates a location of the device 100 or 200 by using the Time Of Arrival (TOA) of the received radio signal from each of the GPS satellites (not illustrated) to the device 100 or 200. The compass sensor calculates an attitude or a bearing of the device 100 or 200.

The communication unit 140 or 240 connects the device 100 or 200 to a server or an external device, directly or via a network, and may be a wired or wireless communication unit. The communication unit 140 or 240 transmits data received from the controller 160 or 260, the memory 130 or 230, or the camera 150 or 250, by wire or wirelessly. Otherwise, the communication unit 140 or 240 receives, by wire, data through an external communication line, or wirelessly receives data transmitted over the air, and delivers the received data to the controller 160 or 260, or stores the received data in the memory 130 or 230.

The communication unit 140 or 240 may include at least one of short-range communication modules, such as a mobile communication module, a Wireless Local Area Network (WLAN) module 144 or 244, a Bluetooth (BT) module 142 or 242, and a Universal Serial Bus (USB) module 146 or 246. Other examples of the communication unit 140 or 240, although not limited thereto, include an Integrated Services Digital Network (ISDN) module, a modem, an Infrared Data Association (IrDA) module, a Zigbee module, and the like.

According to the control of the controller 160 or 260, the mobile communication module connects the device 100 or 200 to an external device via a Wide Area Network (WAN) such as a mobile communication network by using at least one antenna (not illustrated). The mobile communication module transmits and receives a wireless signal to/from an external device, such as a mobile phone, a smart phone, or a tablet PC, which has a telephone number or a network address, in order to conduct a voice call or a video call or to exchange data including a Short Message Service (SMS) message, a Multimedia Messaging Service (MMS) message, or the like.

According to the control of the controller 160 or 260, the WLAN module 144 or 244 is connected to the Internet at a place where a wireless Access Point (AP) (not illustrated) is installed, or performs wireless communication between the device 100 or 200 and an external device. The WLAN module 144 or 244 supports the WLAN standard (i.e., IEEE 802.11x) of the Institute of Electrical and Electronics Engineers (IEEE), Wireless Fidelity (Wi-Fi), Wi-Fi Direct, or the like.

According to the control of the controller 160 or 260, the short-range communication module performs short-range wireless communication between the device 100 or 200 and an external device. Short-range communication schemes may include Bluetooth, IrDA, USB communication, and the like.

The camera 150 or 250 may include a lens system, an image sensor, a flash, and the like. The camera 150 or 250 converts an optical signal, which has been received (or captured) through the lens system, into an electrical image signal, and outputs the electrical image signal to the controller 160 or 260. The user captures a moving image or a still image by using the camera 150 or 250.

The lens system forms an image of the subject by causing light incident from the outside to converge. The lens system includes at least one lens, and each lens may be a convex lens, an aspheric lens, or the like. The lens system has symmetry with respect to an optical axis passing through the center of the lens system, and the optical axis is defined as a central axis. The image sensor detects an optical image formed by external light incident on the lens system, as an electrical image signal. The image sensor includes multiple pixel units arranged in the structure of an M×N matrix, and each pixel unit includes a photo diode and multiple transistors. Each pixel unit accumulates charges generated by the incident light, and a voltage according to the accumulated charges represents the illuminance of the incident light. In the case of processing a still image or one image included in a moving image file, an image signal which is output from the image sensor is formed by a set of voltages (i.e., pixel values) which are output from the pixel units. The image signal represents one frame (i.e., a still image). Also, a frame includes M×N pixels. Examples of the image sensor may include a Charge-Coupled Device (CCD) image sensor, a Complementary Metal-Oxide Semiconductor (CMOS) image sensor, and the like.

A driver drives the image sensor according to the control of the controller 160 or 260. According to a control signal received from the controller 160 or 260, the driver exposes all pixels of the image sensor or only pixels within a region of interest among all the pixels of the image sensor, and causes image data which is generated by the pixels, to be output to the controller 160 or 260.

The controller 160 or 260 processes an image received from the camera 150 or 250, or an image stored in the memory 130 or 230, on a frame-by-frame basis, and outputs an image frame which is converted to meet the characteristics (e.g., size, image quality and resolution) of the screen of the display unit 116 or 216.

The memory 130 or 230 may store applications for various functions or services such as an in-vehicle notification service, navigation, a video call and games; images for providing a Graphical User Interface (GUI) related to the applications; user information; documents; data (e.g., messages, set values, etc.) related to an in-vehicle notification service; background images (e.g., a menu screen image, a standby screen image, etc.) or operating programs, which are required to drive the device 100 or 200; images captured by the camera 150 or 250; and the like. The memory 130 or 230 is a medium readable by a machine (e.g., a computer), or a machine-readable medium. The term "machine-readable medium" is defined as a medium which provides data to the machine in order to enable the machine to perform a particular function. The machine-readable medium may be a storage medium. The memory 130 or 230 may include a non-volatile medium and a volatile medium. All of these mediums must be of a type which may be detected by a physical instrument which causes instructions delivered by the mediums to be read into the machine.

The machine-readable medium, although not limited thereto, includes at least one of a floppy disk, a flexible disk, a hard disk, a magnetic tape, a Compact Disc Read-Only Memory (CD-ROM), an optical disk, a punch card, a paper tape, a Random Access Memory (RAM), a Programmable Read-Only Memory (PROM), an Erasable PROM (EPROM), and a flash-EPROM.

The controller 160 or 260 executes an application according to a request of an external device, user input information, or an automatic execution setting. The application performs a program operation according to the request of the external device, the user input information, or the automatic execution setting. In the present example, the user input includes input from the keypad or the display unit 116 or 216, or camera-based input. The controller 160 or 260 may include a bus for information exchange and a processor connected to the bus in order to process information. The controller 160 or 260 may also include a Random Access Memory (RAM) connected to the bus in order to store information required by the processor. The RAM is used to store temporary information requested by the processor. The device 100 or 200 may further include a Read Only Memory (ROM) connected to the bus in order to store static information required by the processor. The controller 160 or 260 which is a Central Processing Unit (CPU), controls an overall operation of the device 100 or 200, and serves to perform a method for providing an in-vehicle notification service according to an embodiment of the present invention.

Next, an operation between the mobile device 200 and the head unit device 100 will be described below.

The head unit device 100 and the mobile device 200 communicate with each other or are connected to each other through the first and second communication units 140 and 240, according to Transmission Control Protocol/Internet Protocol (TCP/IP). Also, the head unit device 100 and the mobile device 200, although not limited thereto, use a service protocol such as a Common Data Bus (CDB) protocol and the like in order to implement an in-vehicle notification service.

According to a communication scheme which is based on the CDB protocol, the head unit device 100 and the mobile device 200 correspond to a terminal mode client and a terminal mode server, respectively. The head unit device 100 includes a first CDB endpoint 170, which includes: a first CDB source endpoint 174 serving as a data source which transmits data to the mobile device 200; a first CDB sink endpoint 172 serving as a data sink which receives data from the mobile device 200; and a first notification module 176 taking charge of an in-vehicle notification service. The mobile device 200 includes a second CDB endpoint 270, which includes: a second CDB source endpoint 274 serving as a data source which transmits data to the head unit device 100; a second CDB sink endpoint 272 serving as a data sink which receives data from the head unit device 100; and a second notification module 276 taking charge of an in-vehicle notification service. The CDB endpoint 170 or 270 corresponds to a function module within the relevant controller 160 or 260. A function that the CDB endpoint 170 or 270 performs can be described as being performed by the relevant controller 160 or 260, or by the relevant device 100 or 200.

The CDB protocol which is based on a TCP/IP connection is defined in Table 1 below.

**Table 1**

| | |
|---|---|
| **StartService:** | Request CDB source endpoint to start a specific service |
| **StopService:** | Request CDB source endpoint to stop a specific service |
| **ServicesSupported:** | Provide a list of supporter data services |
| **ServicesRequest:** | the list of supported services |
| **ServicePayload:** | Deliver the service specific payload |
| **ServiceErrorResponse:** | Indicate an error within one service |
| **BusError:** | Indicate an error within the Common Data Bus |
| **Ping:** | Message to check the connection |
| **ServiceOkResponse:** | Responds to a Ping, StartService and StopService message |

The current CDB protocol does not define a notification mechanism for services requiring a notification, such as the transmission of call information, that of message information, or that of device status information.

The present invention provides a new notification mechanism in which unidirectional or bidirectional notification in a particular situation, such as the transmission of call information, that of message information or that of device status information, is performed between the head unit device 100 and the mobile device 200 according to in-vehicle characteristics.

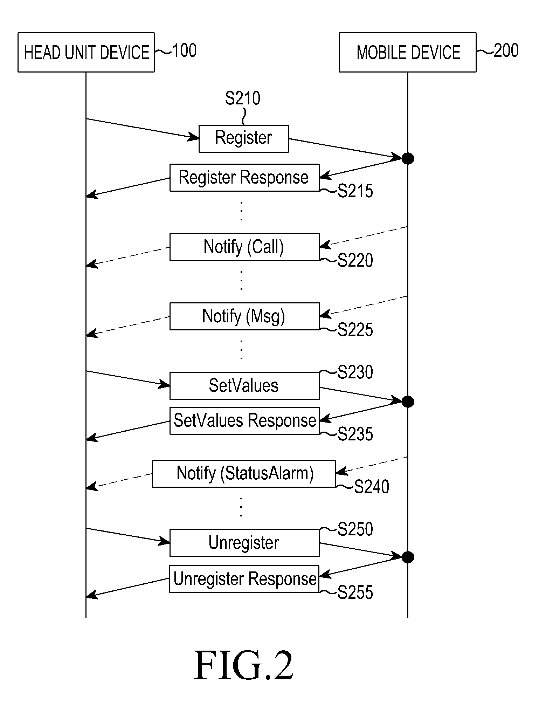

FIG. 2 is a signal flow diagram illustrating a method for providing an in-vehicle notification service according to a first exemplary embodiment of the present invention. FIG. 2 sequentially illustrates messages transmitted and received between the head unit device 100 serving as a notification service sink and the mobile device 200 serving as a notification service source. As described above, the head unit device 100 and the mobile device 200 communicate with each other according to the TCP/IP and the CDB protocol. Each message is generated by the relevant CDB endpoint 170 or 270. The relevant CDB endpoint 170 or 270 transmits and receives each message through the relevant communication unit 140 or 240.

In step S210, the head unit device 100 generates a register message which requests registration (or a subscribe message which requests subscription), and transmits the generated register message to the mobile device 200. The register message is used to register the type of notification, which the head unit device 100 desires to receive, in the mobile device 200, or is used to register an intention to use a preset notification service or all available types of notification services in the mobile device 200.

Similarly, an unregister (or unsubscribe) message which requests the cancellation of registration (or subscription) is used to notify the mobile device 200 of the type of notification which the head unit device 100 does not desire to receive (i.e., the type of notification, the registration or subscription of which is desired to be canceled). Otherwise, the unregister (or unsubscribe) message is used to register an intention to cancel a notification service in the mobile device 200.

In Table 2 below, the first row shows an example of the contents of a subscribe message representing that a call and message-related notification is intended to be received (i.e., a case in which the mobile device 200 will be requested to transmit a call and message-related notification). Also, the second row shows an example of the contents of an unsubscribe message representing that a call and message-related notification is not intended to be received (i.e., a case in which the mobile device 200 will be requested not to transmit a call and message-related notification).

**Table 2**

| |
|---|
| ```
<subscribe>
      <Type>Call, Message</Type>
 </Subscribe>
``` |
| ```
 <Unsubscribe>
      <Type>Call, Message</Type>
 </Unsubscribe>
``` |

In step S215, in response to the register message, the mobile device 200 transmits a register (or subscribe) response message which responds to the registration (or subscription) request, to the head unit device 100. Table 3 below shows an example of the contents of a subscribe response message. The subscribe response message includes subscription success (i.e., OK) or subscription failure (i.e., error), which corresponds to a result of determining the subscription request. In Table 3 below, the first row shows an example of the contents of a subscribe response message which represents subscription success. Also, the second row shows an example of the contents of a subscribe response message which represents subscription failure. An error code may be defined in such a manner as to be variously extended as the need arises.

**Table 3**

| |
|---|
| ```
  <SubscribeResponse>
      <Type>Call, Message</Type>
      <Result>OK</Result>
  </SubscribeResponse>
``` |
| ```
  SubscribeResponse>
      <Type>Call, Message</Type>
      <Result>Error</Result>
      <ErrorCode> 500</ErrorCode>
 </SubscribeResponse>
``` |

Before step S210, the head unit device 100 may transmit a StartService message (i.e., a CDB message), which requests the start of a notification service, to the mobile device 200 according to the CDB protocol.

Selectively, when the StartService message corresponding to the CDB message causes the notification service to start in the head unit device 100 and the mobile device 200, the registration steps (i.e., steps S210 and S215) may be omitted, and the head unit device 100 may be automatically set so as to enable the head unit device 100 to receive all types of notifications from the mobile device 200 without limiting the type of notification.

After the registration steps are performed, the head unit device 100 receives a call information notification message from the mobile device 200 in step S220, or receives a message information notification message from the mobile device 200 in step S225. Otherwise, the head unit device 100 transmits a set value information (i.e., SetValues) message to the mobile device 200 in step S230, the head unit device 100 receives a SetValues response message from the mobile device 200 in step S235, and then the head unit device 100 receives a device StatusAlarm notification message or a device status information notification message from the mobile device 200 in step S240.

In step S250, the head unit device 100 transmits an unregister message, which requests registration cancellation, to the mobile device 200. In step S255, the head unit device 100 receives an unregister response message from the mobile device 200.

Notification types are classified into 4 types. Specifically, the notification types are classified into an incoming call information notification, an outgoing call information notification, a message information notification, and device status information notification.

Call information notifications are classified into an incoming call information notification and an outgoing call information notification according to two call types. Each call information notification includes information on a call status (i.e., call information).

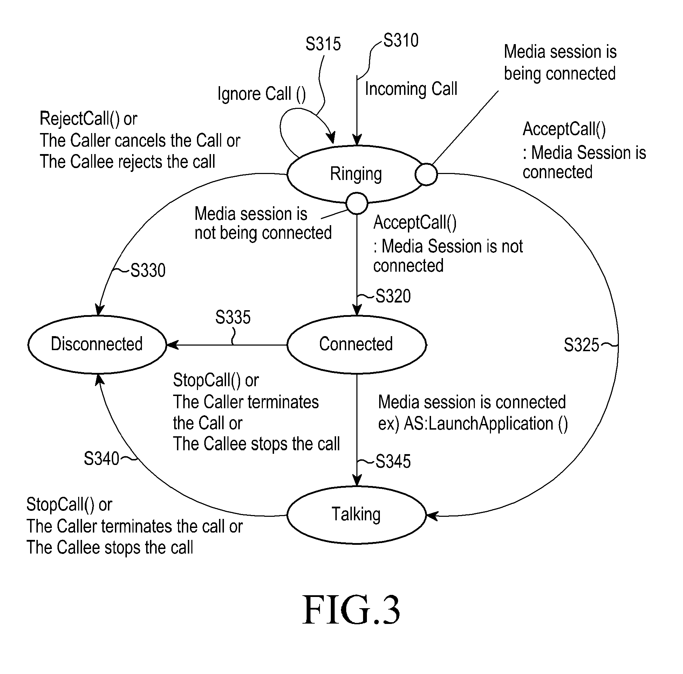

FIG. 3 is a view illustrating a state diagram describing a change in a call status related to an incoming call information notification.

Referring to FIG. 3, the incoming call information notification includes four call statuses, such as called (or ringing), connected, disconnected and talking.

FIG. 3 illustrates a process of transition of a series of call statuses from ringing to disconnected in an incoming call.

When an incoming call arrives in step S310, the mobile device 200 transmits a ringing notification message including call status information, which represents ringing, to the head unit device 100. In response to the ringing notification message, the head unit device 100 transmits an action request message, which includes one action command selected from among three action commands (i.e., which requests that the selected action is intended to be performed), to the mobile device 200. The three action commands correspond to IgnoreCall, AcceptCall, and RejectCall.

First, in step S315, when the mobile device 200 in the ringing status receives , from the head unit device 100, an IgnoreCall action request message (i.e., a message including an IgnoreCall() command) according to user input received by the first user interface 110 or the first camera 150, or according to an automatic setting, the mobile device 200 continues to maintain the ringing status, and each of the head unit device 100 and the mobile device 200 displays a status, in which the telephone seems to be hung up, to the user. For example, a screen that the display unit 116 or 216 displays is not a telephone screen, but returns to a screen before being called (e.g., a screen for another application different from a telephone application, or a home screen), and each of the mobile device 200 and the head unit device 100 does not output a ringing tone (i.e., a ringtone) notifying of reception of a call, through the speaker.

When the mobile device 200 receives , from the head unit device 100 in the ringing status, an AcceptCall action request message (i.e., a message including an AcceptCall() command) according to user input received by the first user interface 110 or the first camera 150, or according to an automatic setting, a call status changes (or transitions) depending on a current connection status of a media session for transmitting a voice or/and an image between the mobile device 200 and the head unit device 100. When the media session is not connected between the mobile device 200 and the head unit device 100, a call status of the mobile device 200 changes from the ringing status to the connected status in step S320, and the mobile device 200 transmits a connection notification message including call status information representing the connected status, to the head unit device 100.

In contrast, when the media session is connected between the mobile device 200 and the head unit device 100, a call status of the mobile device 200 changes from the ringing status directly to the talking status without passing through the connected status in step S325, and the mobile device 200 transmits a talking notification message including call status information representing the talking status, to the head unit device 100.

In step S345, when the mobile device 200 in the connected status receives , from the head unit device 100, a LaunchApplication action request message (i.e., a message including a LaunchApplication() command) according to user input received by the first user interface 110 or the first camera 150, or according to an automatic setting, a call status of the mobile device 200 changes from the connected status to the talking status, the mobile device 200 and the head unit device 100 respectively execute corresponding applications (e.g., media streaming applications for connecting a media session) for connecting a media session, and the mobile device 200 transmits a talking notification message including call status information representing the talking status, to the head unit device 100 during the media session. In the connected status, media data such as voice data and/or image data is input and is output to/from the mobile device 200. In the talking status, media data such as voice data and/or image data is input and is output to/from the head unit device 100.

Meanwhile, in step S330, when the mobile device 200 in the ringing status receives , from the head unit device 100, a RejectCall action request message (i.e., a message including a RejectCall() command) according to user input received by the first user interface 110 or the first camera 150, or according to an automatic setting, a call status of the mobile device 200 changes from the ringing status to the disconnected status, and the mobile device 200 transmits a disconnection notification message including call status information representing the disconnected status, to the head unit device 100. When, even in the ringing status, a user (i.e., a caller) who makes a telephone call cancels the telephone call, or a user (i.e., a callee) who receives the telephone call rejects the telephone call through the mobile device 200, a call status of the mobile device 200 changes to the disconnected status from the ringing status.

In steps S335 and S340, when the mobile device 200 in the connected status or talking status receives , from the head unit device 100, a StopCall action request message (i.e., a message including a StopCall() command) according to user input received by the first user interface 110 or the first camera 150, or according to an automatic setting, a call status of the mobile device 200 changes from the talking status to the disconnected status, and the mobile device 200 transmits a disconnection notification message including call status information representing the disconnected status, to the head unit device 100. When, even in the connected status or talking status, a user (i.e., caller) who makes a telephone call terminates the telephone call or a user (i.e., callee) who receives the telephone call stops the telephone call through the mobile device 200, a call status of the mobile device 200 changes to the disconnected status from the connected status or talking status.

The ringing notification message, the connection notification message, the disconnection notification message and talking message as described above correspond to the types of call information messages.

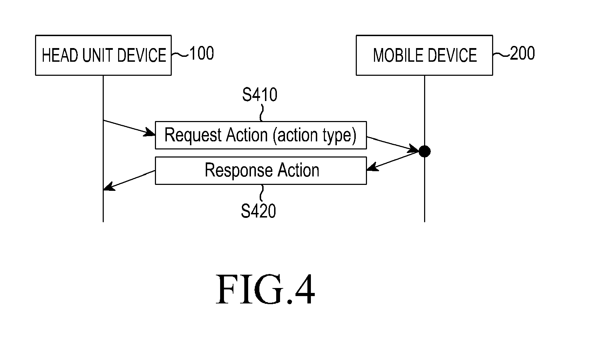

FIG. 4 is a signal flow diagram illustrating an action request and a response to the action request.

In step S410, an action request (i.e., requests such as AcceptCall, RejectCall, IgnoreCall, StopCall, etc.) of the head unit device 100 is transmitted from the head unit device 100 to the mobile device 200 through an action request message including an action type. In step S420, in response to the action request message, the mobile device 200 transmits a response action message, which responds to the action request, to the head unit device 100. The response action message includes action success (i.e., OK) or action failure (i.e., error), which corresponds to a result of determining the action request. The action request message may be transmitted as a response to a call information notification message, and steps S410 and S420 may be performed immediately after step S220 illustrated in FIG. 2.

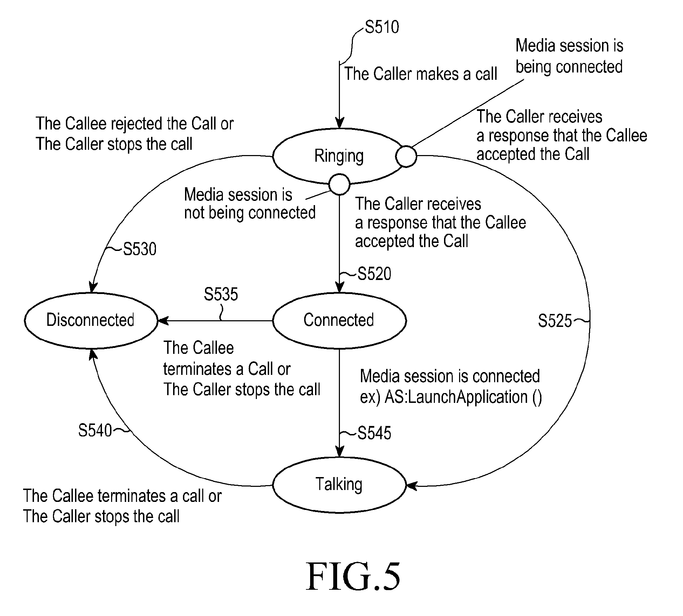

FIG. 5 is a view illustrating a state diagram describing a change in a call status related to an outgoing call notification.

Referring to FIG. 5, the outgoing call notification includes four call statuses, such as calling (or ringing), connected, disconnected and talking.

FIG. 5 illustrates a process of transition of a series of call statuses from a time point when a user makes a telephone call to the outside to a time point when the user hangs up the telephone (or stops the telephone call), in an outgoing call.

First, in step S510, when the user makes a telephone call, a call status of the mobile device 200 changes to the calling status (or the ringing status), and the mobile device 200 transmits a calling notification message (or a ringing notification message) including call status information representing the calling status, to the head unit device 100.

When a callee receives the telephone call in the calling status (i.e., when the mobile device 200 receives a response such that a mobile device of the callee has accepted the telephone call, through a wide area network such as a mobile communication network), a call status changes depending on a connection status of a media session for transmitting a voice or/and an image between the mobile device 200 and the head unit device 100. When the media session is not connected between the mobile device 200 and the head unit device 100, a call status of the mobile device 200 changes from the calling status to the connected status in step S520, and the mobile device 200 transmits a connection notification message including call status information representing the connected status, to the head unit device 100. In contrast, when the media session is connected between the mobile device 200 and the head unit device 100, a call status of the mobile device 200 changes from the calling status directly to the talking status without passing through the connected status in step S525, and the mobile device 200 transmits a talking notification message including call status information representing the talking status, to the head unit device 100.

In step S545, when the mobile device 200 in the connected status receives , from the head unit device 100, a LaunchApplication action request message according to user input received by the first user interface 110 or the first camera 150, or according to an automatic setting, a call status of the mobile device 200 changes from the connected status to the talking status, the mobile device 200 and the head unit device 100 respectively execute corresponding applications (e.g., media streaming applications for connecting a media session) for connecting a media session, and the mobile device 200 transmits a talking notification message including call status information representing the talking status, to the head unit device 100 during the media session. In the connected status, media data such as voice data and/or image data is input and is output to/from the mobile device 200. In the talking status, media data such as voice data and/or image data is input and is output to/from the head unit device 100.

Meanwhile, in step S530, when the mobile device 200 in the calling status receives , from the head unit device 100, a RejectCall action request message according to user input received by the first user interface 110 or the first camera 150, or according to an automatic setting, a call status of the mobile device 200 changes from the calling status to the disconnected status, and the mobile device 200 transmits a disconnection notification message including call status information representing the disconnected status, to the head unit device 100. When, even in the calling status, a user (i.e., a callee) who receives a telephone call rejects the telephone call, or a user (i.e., a caller) who makes the telephone call stops the telephone call through the mobile device 200, a call status of the mobile device 200 changes to the disconnected status from the calling status.

In steps S535 and S540, when the mobile device 200 in the connected status or talking status receives , from the head unit device 100, a StopCall action request message according to user input received by the first user interface 110 or the first camera 150, or according to an automatic setting, a call status of the mobile device 200 changes from the talking status to the disconnected status, and the mobile device 200 transmits a disconnection notification message including call status information representing the disconnected status, to the head unit device 100. When, even in the connected status or talking status, a user (i.e., a callee) who receives a telephone call terminates the telephone call, or a user (i.e., a caller) who makes the telephone call stops the telephone call through the mobile device 200, a call status of the mobile device 200 changes to the disconnected status from the connected status or talking status. The calling notification message, the connection notification message, the disconnection notification message and the talking message as described above correspond to the types of call information messages.

A notification related to messages such as a Short Message Service (SMS) message, a Multimedia Messaging Service (MMS) message and an e-mail, as well as a call may be transmitted from the mobile device 200 to the head unit device 100 through a notification message. Table 4 below shows an example of a format of a message information notification message.

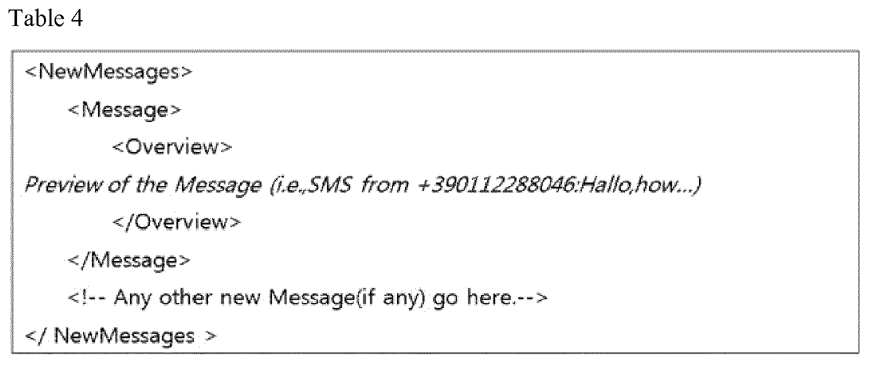

Selectively, elements for entering information, such as a message title, a message body, a message type (e.g., SMS, MMS, E-Mail, etc.), a telephone number and an e-mail address, may be defined below a <Message> element (or field). Also, the contents of a message which are entered in an <Overview> element may be entered separately from the elements for entering the information, such as a message title, a message body, a message type, a telephone number or an e-mail address, as described above.

Differently from a call information notification, the message information notification message is not immediately transmitted whenever a message is received, but the mobile device 200 transmits the message information notification message to the head unit device 100, when the mobile device 200 fails to receive another new message during a preset time period from a time point when the mobile device 200 receives a new message.

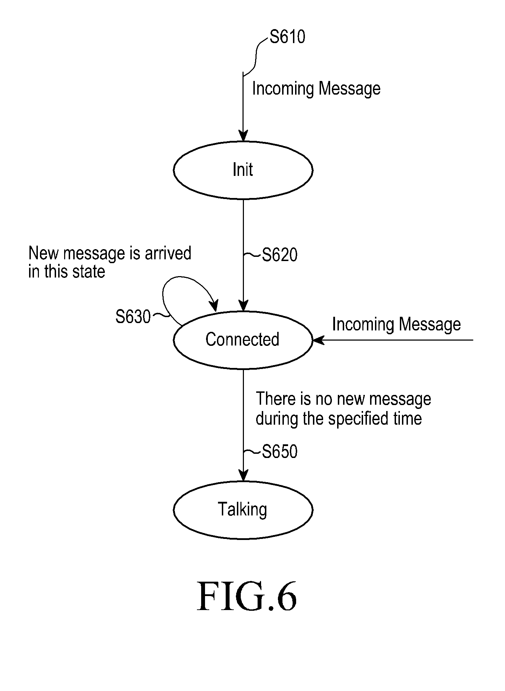

FIG. 6 is a view illustrating a state diagram describing a change in a message status related to an incoming message notification.

Referring to FIG. 6, when a new message arrives at the mobile device 200 in step S610, a status of the mobile device 200 changes from an Init status (or an arrived status) to a waiting status, in step S620. Immediately after the status of the mobile device 200 changes to the waiting status, the mobile device 200 begins to count a particular predetermined time period. In step S630, when another new message arrives before the predetermined time period elapses (i.e., expires), the mobile device 200 maintains the waiting status without any change, and again counts the predetermined time period from the beginning. In step S650, when the predetermined time period elapses (i.e., expires) in the waiting status, a message status of the mobile device 200 changes from the waiting status to a send status (or a talking status), and the mobile device 200 transmits new messages, which the mobile device 200 has received in the Init status and the waiting status, in the format shown in Table 4 to the head unit device 100 through a message information notification message. In addition, when the predetermined time period does not expire while new messages continue to arrive at the mobile device 200 in the waiting status, the mobile device 200 may face an infinite loop situation in which a message information notification message fails to be transmitted. Accordingly, when the status of the mobile device 200 changes from the Init status to the waiting status, the mobile device 200 begins to count the value of a preset maximum setting time period. Even when a new message arrives in the waiting status, the value of the preset maximum setting time period does not begin to be counted again, but continues to be counted. Even when the predetermined time period which begins to be counted again whenever a new message arrives does not expire, if the value of the preset maximum setting time period expires, a status of the mobile device 200 automatically changes to a send status, and transmits new messages, which have been received during a time period until the status of the mobile device 200 automatically changes to the send status, through a notification message. When the notification message has been transmitted as described above, a status of the mobile device 200 changes from the send status to the Init status. A state diagram related to the message information notification message is managed within the mobile device 200, and the mobile device 200 does not transmit status information to the head unit device 100 whenever a status thereof changes.

As another notification message type, a device status type or a device status alarm type exists. A notification message of this type can be activated by only a SetValue action message, differently from notification messages of other types. Table 5 below shows parameter values included in a SetValue action message.

**Table 5**

| |
|---|
| ```
 <Parameters>
      <Parameter>
           <ParameterPath>
               /Phone/Settings/Battery/LowBatteryAlarmLevel
           </ParameterPath>
           <Value>
               30
           </Value>
      </Parameter>
      <!-- Any other parameters(if any) go here.-->
  </Parameters>
``` |

In Table 5, the parameters, for example, represent setting information on a battery danger notification. A device data model for a device status alarm may be defined, "/Phone/Settings/Battery/LowBatteryAlarmLevel" which is a path for the device data model is inserted into a <ParameterPath> element, and a threshold of 30 which is a value corresponding to the path may be set for <value>. In this case, when a battery level drops below 30 %, the mobile device 200 transmits a notification message to the head unit device 100. The transmitted device status information notification message may be expressed by Table 6 below.

**Table 6**

| |
|---|
| ```
 <Status>
      <ParameterPath>
           /Phone/Settings/Battery/LowBatteryAlarmLevel
      </ParameterPath>
      <Value>
           30
      </Value>
 </Status>
``` |

In Table 6, the notification message represents that a parameter path previously set in a SetValue action message is "/Phone/Settings/Battery/LowBatteryAlarmLevel" and the value has arrived at 30 %. In another embodiment of the present invention, signal strength information or the like of the mobile device 200 may be reported.

Each of the first or second notification modules 176 and 276 illustrated in FIG. 1 transmits a notification message to the notification module of the counterpart device according to a notification protocol defined in Table 7 below representing a format of a notification message, Table 8 below representing a format of a register message, and Table 9 below representing a format of a unregister message.

**Table 7**

| **# bytes** | **Type** | **Value** | **Description** |
|---|---|---|---|
| 2 | U16 | 0xB107 | Message-type |
| 2 | U16 | 4+M | Payload length |
| 2 | U16 | | Related Service ID |
| 2 | U16 | | Notification Type ID |
| M | Array of U8 | | Payload for the Notification |

**Table 8**

| **# bytes** | **Type** | **Value** | **Description** |
|---|---|---|---|
| 2 | U16 | 0xB108 | Message-type |
| 2 | U16 | 2 | Payload length |
| 2 | U16 | | Related Service ID |
| 2 | U16 | | Notification Type ID |

**Table 9**

| # **bytes** | **Type** | **Value** | **Description** |
|---|---|---|---|
| 2 | U16 | 0xB109 | Message-type |
| 2 | U16 | 2 | Payload length |
| 2 | U16 | | Related Service ID |
| 2 | U16 | | Notification Type ID |

The notification message is transmitted to only a device which has previously subscribed through a register (or subscribe) message having the format represented by Table 8.

A related service ID is a value for representing a notification related to a provided service. For example, a case is described in which a service for providing a status of the mobile device 200 exists and the service has a particular service ID. In this case, when a notification is intended to be transmitted in a particular status of the mobile device 200, the particular service ID of the mobile device 200 is used to enter the value of the related service ID of the notification message. As the need arises, the related service ID may exist in an optional form within each message.

In the formats of the messages, when a related service does not currently exist and a particular notification message is intended to be transmitted without the related service, "0" is entered as the value of the related service ID. A notification type ID is a field notifying of which type a notification has. For example, the notification type ID may be defined as in Table 10 below.

**Table 10**

| **Notification Type ID** | **Notification Type** | **Description** |
|---|---|---|
| 0 | Call | Call related notifications (ex. Incoming call notification) |
| 1 | Message | ··· |
| 2 | Device Status | |
| 3 | ··· | |

When an unregister message having the format defined in Table 9 is transmitted, a notification message is no longer transmitted.

Then, when a service is terminated by a StopService message defined by a CDB protocol having a format defined in Table 11 below, a service ID included in the StopService message is set so as to have a value identical to a related service ID, and even a registered notification is automatically terminated without cancelling the registration.

**Table 11**

| # **bytes** | **Type** | **Value** | **Description** |
|---|---|---|---|
| 2 | U16 | 0xB104 | Message-type |
| 2 | U16 | 2 | Payload length |
| 2 | U16 | | Service ID |

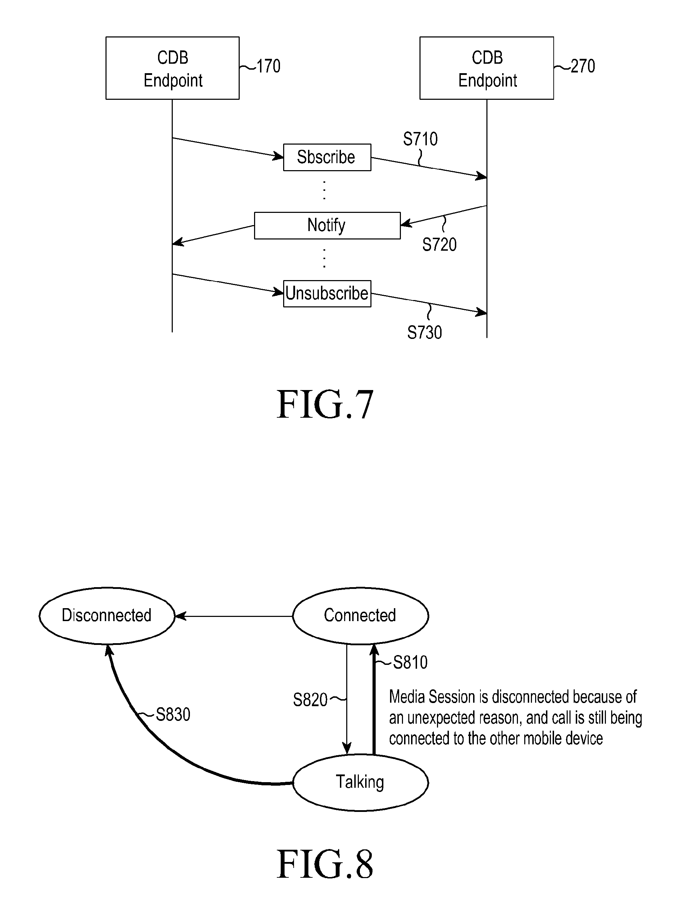

FIG. 7 is a signal flow diagram illustrating a signal flow which is based on a CDB architecture illustrated in FIG. 1, according to a first embodiment of the present invention. When the first CDB endpoint 170 transmits a register message to the second CDB endpoint 270 in step S710, the second CDB endpoint 270 transmits a notification message to the first CDB endpoint 170 whenever an event of a registered type occurs, in step S720. When the first CDB endpoint 170 transmits an unregister message to the second CDB endpoint 270 in step S730, the transmission of a notification message is interrupted.

The event may be one of the call reception, the call origination, the change in the call status, the message reception, the change in the message status and the device status alarm, as described above.

FIG. 8 is a state diagram illustrating an example of a change in a call status in a case where a media session is unexpectedly disconnected, according to a first embodiment of the present invention. When a media session previously connected between the in-vehicle head unit device 100 and the mobile device 200 is disconnected for an unexpected reason during a telephone call, although the telephone call is currently connected between a counterpart mobile device and the mobile device 200, the media session is disconnected, so that a situation occurs in which it is impossible to talk on the telephone through the head unit device 100.

When the media session is unexpectedly disconnected, the mobile device 200 first identifies whether there exists its own method in which a telephone call can be urgently performed without a media session. For example, when the mobile device 200 is automatically switched to a speaker mode, a user who is driving enters a state in which the user can talk to a counterpart user on the telephone without a media session. However, because this scheme corresponds to a temporary method, the user must attempt to reconnect a media session in order to perform a telephone call through the head unit device 100. Because it needs some time to connect the media session, the mobile device 200 needs to provide its own method in which the driver can talk on the telephone, as described above. After the mobile device 200 operates according to its own method (e.g., enters a speaker mode) as described above, the mobile device changes a call status thereof from a talking status to a connected status, in step S810. Then, the mobile device 200 transmits a connection notification message including call status information representing the connected status, to the in-vehicle head unit device 100. When the in-vehicle head unit device 100 receives the connection notification message, the in-vehicle head unit device 100 reconnects a media session. When the existing media session using a Real-time Transfer Protocol (RTP) is unexpectedly disconnected and it is impossible to reconnect the existing media session, the in-vehicle head unit device 100 connects a media session by using another scheme or protocol (e.g., a BT Hands-Free Profile (BT HFP)). When the media session is connected, the mobile device 200 changes a call status thereof from the connected status to a talking status, in step S820. Then, the mobile device 200 transmits a talking notification message including call status information representing a talking status, to the in-vehicle head unit device 100.

When the mobile device 200 does not include its own method or protocol as described above that the mobile device 200 can use, a call status of the mobile device 200 may change to a disconnected status, or may transition to a connected status in order to reconnect a media session. When a call status of the mobile device 200 changes to a disconnected status in step S830, the telephone call with the counterpart user is disconnected in the mobile device 200, and the mobile device 200 transmits a disconnection notification message including call status information representing the disconnected status, to the in-vehicle head unit device 100. At this time, the user is induced to again talk to the counterpart user on the telephone, by inserting a particular parameter for again talking to the counterpart user on the telephone into the disconnection notification message and in such a manner that the in-vehicle head unit device 100 notifies the user that the telephone is currently in a disconnected status.

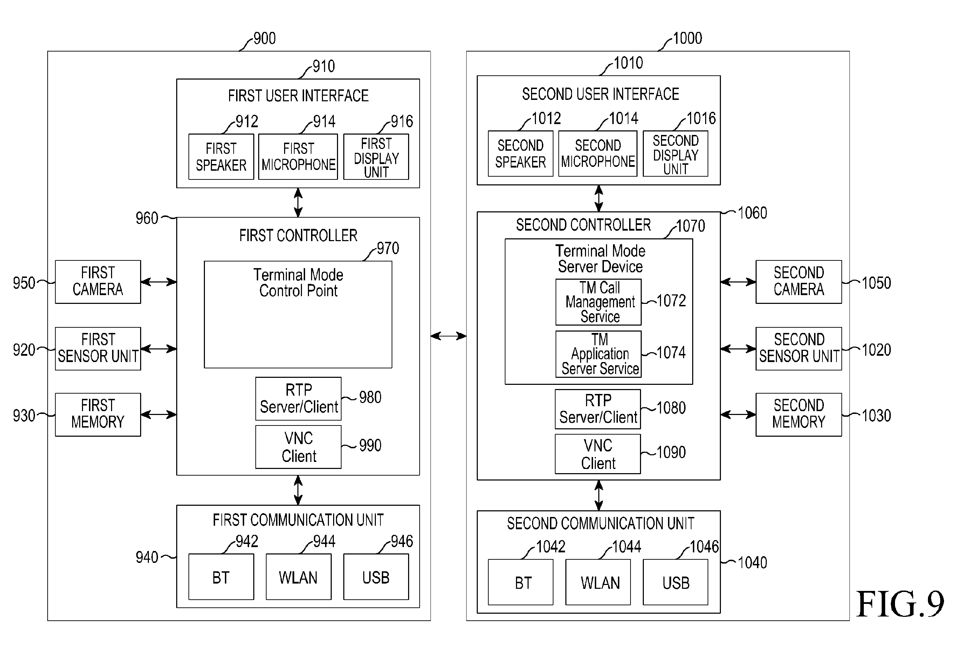

FIG. 9 is a block diagram illustrating a configuration of a system for providing an in-vehicle notification service according to a second exemplary embodiment of the present invention. The system includes a head unit device 900 and a mobile device 1000, which are installed in a vehicle. The system has an architecture which can be used in the Car Connectivity Consortium (CCC) standard.

The head unit device 900 includes a first user interface 910, which includes a first speaker 912, a first microphone 914 and a first display unit 916, a first sensor unit 920, a first memory 930, a first communication unit 940, a first camera 950, and a first controller 960.

The mobile device 1000 includes a second user interface 1010, which includes a second speaker 1012, a second microphone 1014 and a second display unit 1016, a second sensor unit 1020, a second memory 1030, a second communication unit 1040, a second camera 1050, and a second controller 1060.

The head unit device 900 and the mobile device 1000 communicate with each other or are connected to each other through the first and second communication units 940 and 1040, according to TCP/IP. Also, the mobile device 1000 and the head unit device 900, although not limited thereto, use a service protocol such as a Universal Plug and Play (UPnP) protocol or the like in order to implement an in-vehicle notification service.

According to a communication scheme which is based on the UPnP protocol, the mobile device 1000 and the head unit device 900 correspond to a terminal mode server and a terminal mode client, respectively.

The system has a configuration similar to that of the system illustrated in FIG. 1. There is a difference in that the first and second controllers 160 and 260 illustrated in FIG. 1 has a CDB architecture whereas the first and second controllers 960 and 1060 illustrated in FIG. 9 have a UPnP architecture. Accordingly, descriptions of the first and second user interfaces 910 and 1010, the first and second sensor units 920 and 1020, the first and second memories 930 and 1030, the first and second communication units 940 and 1040, and the first and second cameras 950 and 1050 overlap the descriptions related to FIG. 1, and thus will be omitted in order to avoid redundancy.

The second controller 1060 of the mobile device 1000 includes a terminal mode server device module 1070 for UPnP communication. The terminal mode server device module 1070 includes a Terminal Mode (TM) call management service module 1072 and a TM application server service module 1074. The TM call management service module 1072 takes charge of call management and a call-related notification. The TM application server service module 1074 executes or terminates the execution of an application stored in the mobile device 1000, or performs application management such as bringing an application list. The second controller 1060 includes a second Real-Time Protocol (RTP) server/client module 1080 for connecting an RTP-based media session, and a Virtual Network Computing (VNC) server module 1090 for connecting a VNC protocol-based media session.

The first controller 960 of the head unit device 900 includes a terminal mode control point 970 for UPnP communication. The terminal mode control point 970 manages a media connection for a call and a VNC connection. The first controller 960 includes a first RTP server/client module 980 for connecting an RTP-based media session, and a VNC client module 990 for connecting a VNC protocol-based media session. The terminal mode control point 970 transmits a command to the TM application server service module 1074, and thereby executes the second RTP server/client module 1080 within the mobile device 1000 and the first RTP server/client module 980 within the head unit device 900, in order to make a media streaming connection (i.e., an RTP connection) for a telephone call between the mobile device 1000 and the head unit device 900. Such an RTP connection may be made depending on the change in the call status described with reference to FIG. 3 and FIG. 4. Also, the terminal mode control point 970 may execute the VNC server module 1090 within the mobile device 1000 and the VNC client module 990 within the head unit device 900, in order to make a VNC connection.

The descriptions of FIG. 3 and FIG. 5 are also applied to a configuration according to a second embodiment of the present invention. Hereinafter, a change in a call status related to an outgoing call notification will be described for illustrative purposes only.

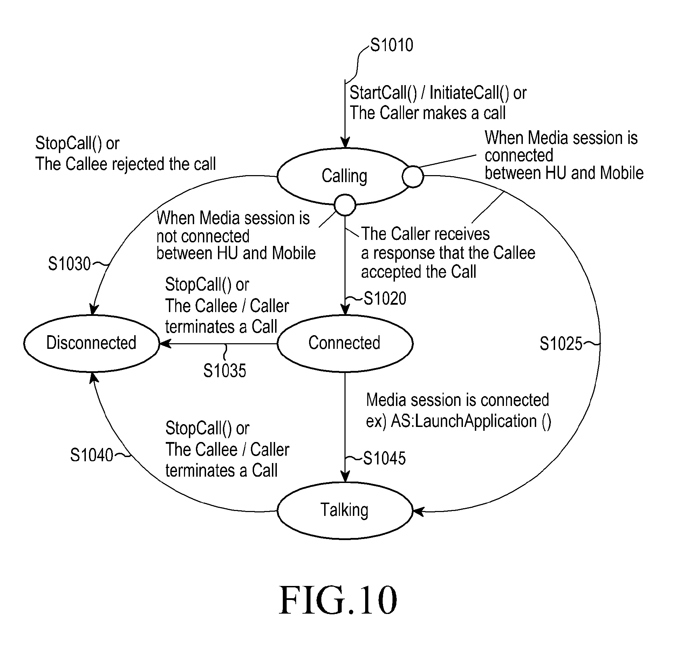

FIG. 10 is a view illustrating a state diagram describing a change in a call status related to an outgoing call notification using a UPnP telephony.

Referring to FIG. 10, the outgoing call notification includes four call statuses, such as calling (or ringing), connected, disconnected and talking. FIG. 10 illustrates a process of transition of a series of call statuses from a time point when a user makes a telephone call to the outside to a time point when the user hangs up the telephone (or terminates the telephone call), in an outgoing call.

First, when the user makes a telephone call or the head unit device 900 transmits a StartCall or InitiateCall action request message (i.e., a message including a StartCall() or InitiateCall() command) to the mobile device 1000 in step S1010, a call status of the mobile device 1000 changes to the calling status, and the mobile device 1000 transmits a calling notification message including call status information representing the calling status, to the head unit device 900.

When a callee receives the telephone call in the calling status (i.e., when the mobile device 1000 receives a response such that a mobile device of the callee has accepted the telephone call, through a wide area network such as a mobile communication network), a call status changes depending on a connection status of a media session for transmitting a voice or/and an image between the mobile device 1000 and the head unit device 900. When the media session is not connected between the mobile device 1000 and the head unit device 900, a call status of the mobile device 1000 changes from the calling status to the connected status in step S1020, and the mobile device 1000 transmits a connection notification message including call status information representing the connected status, to the head unit device 900. In contrast, when the media session is connected between the mobile device 1000 and the head unit device 900, a call status of the mobile device 1000 changes from the calling status directly to the talking status without passing through the connected status in step S1025, and the mobile device 1000 transmits a talking notification message including call status information representing the talking status, to the head unit device 900.

When the mobile device 1000 in the connected status receives , from the head unit device 900, a LaunchApplication action request message (i.e., a message including a LaunchApplication() command) according to user input received by the first user interface 910 or the first camera 950, or according to an automatic setting in step S1045, a call status of the mobile device 1000 changes from the connected status to the talking status, the mobile device 1000 and the head unit device 900 respectively execute corresponding applications (e.g., media streaming applications for connecting a media session) for connecting a media session, and the mobile device 1000 transmits a talking notification message including call status information representing the talking status, to the head unit device 900 during the media session. In the connected status, media data such as voice data and/or image data is input and is output to/from the mobile device 1000. In the talking status, media data such as voice data and/or image data is input and is output to/from the head unit device 900.

Meanwhile, when the mobile device 1000 in the calling status receives , from the head unit device 900, a StopCall action request message (i.e., a message including a StopCall() command) according to user input received by the first user interface 910 or the first camera 950, or according to an automatic setting in step S1030, a call status of the mobile device 1000 changes from the calling status to the disconnected status, and the mobile device 1000 transmits a disconnection notification message including call status information representing the disconnected status, to the head unit device 900. When, even in the calling status, a user (i.e., a callee) who receives a telephone call rejects the telephone call, or a user (i.e., a caller) who makes the telephone call terminates the telephone call through the mobile device 1000, a call status of the mobile device 1000 changes to the disconnected status from the calling status.

In steps S1035 and S1040, when the mobile device 1000 in the connected status or talking status receives , from the head unit device 900, a StopCall action request message according to user input received by the first user interface 910 or the first camera 950, or according to an automatic setting, a call status of the mobile device 1000 changes from the talking status to the disconnected status, and the mobile device 1000 transmits a disconnection notification message including call status information representing the disconnected status, to the head unit device 900. When, even in the connected status or talking status, a user (i.e., a callee) who receives a telephone call terminates the telephone call, or a user (i.e., a caller) who makes the telephone call terminates the telephone call through the mobile device 1000, a call status of the mobile device 1000 changes to the disconnected status from the connected status or talking status.

The above-described commands correspond to UPnP action commands for call management.

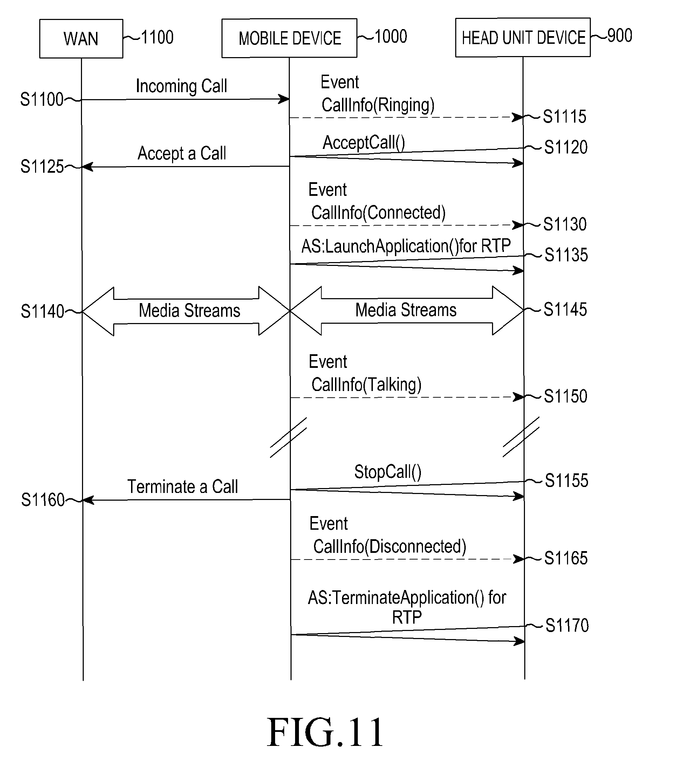

FIG. 11 is a signal flow diagram illustrating a method for performing media streaming between an in-vehicle head unit device and a mobile device, according to a second embodiment of the present invention.

When an incoming call arrives at the mobile device 1000 through a WAN 1100 in step S1110, the mobile device 1000 transmits a call information notification message (or a call information notification event) including call status information (i.e., CallInfo) representing a called status (or a ringing status), to the head unit device 900 in step S1115. When the head unit device 900 receives the call information notification message, the head unit device 900 displays a notification GUI to a user. The user views the notification GUI, and selects an accept button indicating that the user will receive a telephone call. When the user uses the accept button, the head unit device 900 transmits an AcceptCall action request message including an AcceptCall action command (i.e., AcceptCall()) defined by the UPnP, to the mobile device 1000 in step S 1120. In step S 1125, when the mobile device 1000 receives the AcceptCall action request message, the mobile device 1000 transmits a signal indicating that the user will receive the telephone call, to the WAN 1100. When a telephone call is actually connected between the mobile device 1000 and a counterpart user, a notification indicating that the telephone call has been connected (i.e., a connection notification message including call status information representing a connected status) is transmitted from the mobile device 1000, to the head unit device 900 in step S1130. When the head unit device 900 receives the connection notification message, the head unit device 900 makes an RTP connection. In order to connect a telephone call, the first RTP server/client module 980 within the in-vehicle head unit device 900 needs to be driven. Also, in order to drive the second RTP server/client module 1080 within the mobile device 1000, the head unit device 900 transmits a LaunchApplication action request message (i.e., a message including a LaunchApplication() command), to the mobile device 1000 in step S1135. As the need arises, the first and second RTP server/client modules 980 and 1080 may be previously connected to each other. When the RTP connection is successfully made, both a media streaming connection between the WAN 1100 and the mobile device 1000 and a media streaming connection (i.e., a media session connection) for a telephone call between the mobile device 1000 and the head unit device 900 are completed, in steps S1140 and S1145. A call status of the mobile device 1000 changes from the connected status to a talking status in step S1150, and the mobile device 1000 transmits a talking notification message including call status information representing the talking status, to the head unit device 900. The user's voice can be transmitted to the mobile device 1000 through the in-vehicle head unit device 900. Also, a counterpart user' voice can be transmitted from the mobile device 1000 to the in-vehicle head unit device 900.

In step S1155, when the mobile device 1000 in the talking status receives , from the head unit device 900, a StopCall action request message (i.e., a message including a StopCall() command) according to user input received by the first user interface 910 or the first camera 950, or according to an automatic setting, the mobile device 1000 terminates the call between itself and the WAN 1100 in step S1160, a call status of the mobile device 1000 changes from the talking status to a disconnected status, and the mobile device 1000 transmits a disconnection notification message including call status information representing the disconnected status, to the head unit device 900 in step S 1165. In step S1170, the head unit device 900 transmits a TerminateApplication action request message including a TerminateApplication action command (i.e., TerminateApplication()) to the mobile device 1000, and thereby terminates the operation of the second RTP server/client module 1080 within the mobile device 1000.

This embodiment of the present invention describes the RTP connection, but the description of this embodiment of the present invention may also be applied to a VNC connection.

In the above-described embodiments of the present invention, the term "module" may be replaced in use by a unit, or may be omitted.

It will be appreciated that embodiments of the present invention may be implemented in the form of hardware, software, or a combination of hardware and software. Any such software may be stored in a volatile or non-volatile storage device such as a ROM, or in a memory such as a RAM, a memory chip, a memory device or a memory integrated circuit, or in a storage medium, such as a Compact Disc (CD), a Digital Versatile Disc (DVD), a magnetic disk or a magnetic tape, which is optically or magnetically recordable and simultaneously, is readable by a machine (e.g., a computer), regardless of whether the software can be deleted or rewritten. It will be appreciated that the memory which may be included in the mobile device or the head unit device is an example of a machine-readable storage medium suitable for storing a program or programs including instructions for implementing the embodiments of the present invention. Accordingly, embodiments of the present invention include a program including codes for implementing a device or a method which is claimed in any claim of this specification, and a storage medium which stores this program and is readable by a machine. Also, this program may be electronically conveyed via any medium such as a communication signal transmitted through a wired or wireless connection, and the present invention suitably includes equivalents of this program.

Also, the mobile device or the head unit device receives and stores the program from a device for providing a program, which is connected by wire or wirelessly to the mobile device or the head unit device. The device for providing a program includes a memory for storing a program including instructions which cause the mobile device or the head unit device to perform a previously-set method for providing an in-vehicle notification service, and information required for the method for providing an in-vehicle notification service; a communication unit for performing wired or wireless communication with the mobile device or the head unit device; and a controller for performing a control operation so as to transmit the relevant program to the mobile device or the head unit device, at a request from the mobile device or the head unit device or automatically.

While the present invention has been shown and described with reference to embodiments thereof, it will be understood by those having ordinary knowledge in the technical field, to which the present invention pertains, that the present invention may be practiced in other specific forms without changing the technical idea or essential features of the present invention. Therefore, it should be understood that the embodiments of the present invention have been described for illustrative purposes only in all aspects and do not limit the present invention.

## Claims

1. A method for providing an in-vehicle notification service by a head unit device, the method comprising:
sending a request for start of a notification service to a mobile device;
receiving information on an event from the mobile device, according to occurrence of the event which becomes a target of notification; and
displaying the information on the event to a user.

2. The method as claimed in claim 1, wherein the event corresponds to one of call reception, call origination, a change in a call status, message reception, a change in a message status and a device status alarm.

3. The method as claimed in claim 1, further comprising sending a request for stop of the notification service to the mobile device.

4. The method as claimed in claim 1, further comprising:
receiving a user input according to the display of the information on the event; and
sending a request for an action corresponding to the user input to the mobile device.

5. The method as claimed in claim 4, wherein the action corresponds to one of call ignorance, call acceptance and call rejection.

6. The method as claimed in claim 1, further comprising sending a request for execution of an application for a connection of a media session, to the mobile device.

7. The method as claimed in claim 6, further comprising:
receiving voice data or image data from the mobile device during the media session; and
outputting the received voice data or the received image data by a user interface.

8. The method as claimed in claim 2, further comprising transmitting a threshold for the device status alarm to the mobile device.

9. A machine-readable storage medium storing a program for executing the method for providing the in-vehicle notification service as claimed in any one of claims 1 to 8.

10. A head unit device comprising the machine-readable storage medium as claimed in claim 9.

11. A method for providing an in-vehicle notification service by a mobile device, the method comprising:
receiving a request for start of a notification service from a head unit device; and
transmitting information on an event to the head unit device, according to occurrence of the event which becomes a target of notification,
wherein the event corresponds to one of call reception, call origination, a change in a call status, message reception, a change in a message status and a device status alarm.

12. The method as claimed in claim 11, wherein the call status corresponds to one of a ringing status, a calling status, a connected status, a disconnected status and a talking status.

13. The method as claimed in claim 11, further comprising:
receiving a request for an action related to the event, from the head unit device; and
performing the requested action, and transmitting a result of performing the requested action, to the head unit device.

14. A machine-readable storage medium storing a program for executing the method for providing the in-vehicle notification service as claimed in any one of claims 11 to 13.

15. A mobile device comprising the machine-readable storage medium as claimed in claim 14.
